# EUROPÄISCHE PATENTSCHRIFT

(11) **EP 1 228 692 B1**
(45) Veröffentlichungstag und Bekanntmachung des Hinweises auf die Patenterteilung: **03.09.2003**
(21) Anmeldenummer: 02001692.9
(22) Anmeldetag: 24.01.2002
(51) Int. Cl.: A01N 43/707

(54) **Wässrige Metamitron Suspensionkonzentrate**
Aqueous Metamitron suspension concentrates
Concentrés de Metamitron sous forme de suspensions aqueuses

(30) Priorität: 03.02.2001 DE 10104915
(43) Veröffentlichungstag der Anmeldung: 07.08.2002
(73) Patentinhaber: Feinchemie Schwebda GmbH, 37269 Eschwege (DE)
(72) Erfinder: Schnell, Renate Dr., geb.Peters, Diplomchemiker, 37269 Eschwege (DE); Nielsen, Erik, Chemieingenieur, 2670 Greve (DK)
(74) Vertreter: WALTHER, WALTHER & HINZ Patentanwälte

(56) Entgegenhaltungen:
- EP-A- 0 620 971
- EP-A- 0 641 516

## Beschreibung

Die vorliegende Erfindung betrifft ein herbizides Suspensionskonzentrat von Metamitron (4-Amino-4,5-dihydro-3-methyl-6-phenyl-1,2,4-triazin-5-on) in fein gemahlener Form, suspendiert in einer flüssigen, wässrigen Phase in einer Menge von 500 bis 900 g/l (51 bis 71 Gew.-%).

Metamitron wurde von der Firma Bayer AG zu Beginn der 70er Jahre erfunden/eingeführt (BEP 799 854; GBP 1 368 416). Während des Zeitraums, in dem Bayer das Patent für den Wirkstoff hielt, wurde dieser nur in Form trockener Mischungen, entweder als Pulver oder als Mikrogranulat, verkauft.

In dem deutschen Patent DE 43 13 093 und dem nachfolgenden europäischen Patent EP 0 620 971 sind hoch konzentrierte, rein wässrige Suspensionskonzentrate, die Metamitron in einem Konzentrationsbereich von 400 bis 800 g/l enthalten, beschrieben. Die für die Dispergierung des Metamitrons bevorzugten oberflächenaktiven Substanzen sind Phosphatester von ethoxyliertem Tristyrylphenol, Phosphatester von alkoxyliertem C₈₋₂₄-alkylphenol, Ligninsulfonat, C₈₋₂₄-alkylbenzolsulfonat und insbesondere Blockpolymere aus α-(p-Nonylphenyl)-ω-hydroxy-polyoxypropylen und Polyoxyethylen.

Vor diesem Patent sind in der EP 0 639 047 ölhaltige Suspensionskonzentrate von den Herbiziden Metamitron, Ethofumesat und Phenmedipham beschrieben. Die Gesamtmenge an Herbizid betrug jedoch nur 1 bis 50 Gew.-%. Die Herbizide wurden entweder in reinem Öl oder in einer Öl-Wasser-Phase suspendiert. Im Falle des Metamitron werden jedoch keine Beispiele für eine wässrige Öl-Suspension angegeben. Bislang ist auch nicht bekannt, dass wässrige Öl-Suspensionen von Metamitron vertrieben wurden. Dies muss darauf zurück zu führen sein, dass es nicht gelungen ist, wässrige, ölhaltige, hochkonzentrierte Suspensionskonzentrate von Metamitron herzustellen.

Andererseits konnten ölhaltige Suspensionen der anderen Herbizide für den Markt entwickelt werden. So vertrieb die Firma KVK ein ölhaltiges Suspensionskonzentrat mit 160 g/l Phenmedipham unter der Marke "Herbasan®". Dies war das erste Produkt dieses Typs mit sowohl einer guten Stabilität als auch einer guten biologischen Wirkung.

Aber auch die in der EP 0 620 971 beschriebene Erfindung der Firma Stefes Pflanzenschutz GmbH wurde unter der Marke "Stefes Metron®" ein rein wässriges Suspensionskonzentrat von 700 g/l Metamitron kommerziell verwertet. Bayer AG verkaufte ein ähnliches Produkt als flüssiges "Goltix®".

Die von den beiden Herstellern vermarkteten Produkte wiesen bezüglich der Sedimentation generell eine schlechte Stabilität auf. Es war nicht ungewöhnlich, dass das sich Metamitron bei der Lagerung als eine auf dem Boden der Verpackung festgesetzte Schicht niederschlug. Diese Tendenz war bei Lagerung bei hohen Temperaturen am stärksten ausgeprägt. Daher mussten die Produkte in mehreren Ländern zurückgerufen werden.

Suspensionskonzentrate von Metamitron werden zur Herstellung einer verwendungsfertigen Spritzbrühe mit Wasser verdünnt. Hierbei und insbesondere bei gleichzeitiger Zugabe von Öl neigen die bekannten Suspensionskonzentrate von Metamitron zu Ausflockungen. Öl ist in der Spritzbrühe wünschenswert, weil es die Wirkung der Rübenherbizide verbessert. Es hat sich herausgestellt, dass die oben erwähnten Copolymere aus Polyoxypropylen und Polyoxyethylen eine ungenügende emulgierende Wirkung auf das Öl aufweisen, wodurch ein Ausflocken von Metamitron verursacht wird.

Es hat sich nun überraschend herausgestellt, dass durch Naphthalinsulfonat-Formaldehyd-Kondensat als oberflächenaktive Substanze in einer Menge von 2 bis 50 g/l und ein oder mehrere in der wässrigen Phase emulgierte(s) Öl einer Menge von 2 bis 40 g/l sowohl die Stabilität des unverdünnten, ölhaltigen Suspensionskonzentrates hinsichtlich der Sedimentation verbessert als auch die Ausflockung bei der Herstellung der Spritzbrühe verhindert, wenn das Suspensionskonzentrat mit Wasser unter Rühren gemischt wird. Hierbei beträgt der Gesamtgehalt an oberflächenaktiven Substanzen mindestens 10 g/l, höchstens jedoch 150 g/l, bevorzugt 12 bis 120 g/l, weiter bevorzugt 16 bis 90 g/l, besonders bevorzugt 20 bis 80 g/l. In Bezug auf die oberflächenaktiven Substanzen ist vorgesehen, dass der Gehalt an solchen ausgewählten oberflächenaktiven Substanzen aus der Gruppe umfassend die coethoxylierte / -propoxylierte nichtionische oberflächenaktive Substanzen , Phosphatester von alkoxyliertem Mono, Di- oder Tristyrylphenol, Sulfatester von alkoxylierten Mono-, Di- oder Tristyrylphenol 10 bis 130 g/l beträgt, bevorzugt 12 bis 105 g/l, weiter bevorzugt 16 bis 80 g/l und insbesondere 20 bis 60 g/l beträgt.

Ferner hat sich herausgestellt, dass maßvolle Mengen von emulgiertem Öl im Suspensionskonzentrat eine wünschenswerte ergänzende Wirkung auf die Fließfähigkeit und Stabilität der Zubereitung haben und dass das Naphthalinsulfonat-Formaldehyd-Kondensat das zugefügte, emulgierte Öl stabilisiert, obwohl es üblicherweise nicht als typische Emulgatorkomponente beschrieben wird.

Ein maßvoller Gehalt an oberflächenaktiven Substanzen, z. B. 30 g/l, in dem noch der Anteil des Naphthalinsulfonat-Formaldehyd-Kondensates enthalten ist, kann sowohl das fein gemahlene Metamitron als auch das zugefügte, emulgierte Öl stabilisieren. Diese Menge ist geringer als üblicherweise in der Patentliteratur beschrieben wird und führt gleichzeitig zu einer deutlich verbesserten physikalischen Stabilität.

Die Metamitron enthaltenden Suspensionskonzentrate können bei Herstellung der Spritzbrühe gegebenenfalls mit emulgiertem Öl oder ölhaltigen Pestiziden gemischt werden.

Bevorzugte Ausführungen der erfindungsgemäßen Suspensionskonzentrate sind aus den Ansprüchen 2 bis 8 ersichtlich.

So ist insbesondere vorgesehen, dass der Gesamtgehalt an Metamitron 550 bis 850 g/l (52 bis 69 Gew.-%), bevorzugt 600 bis 800 g/l (53 bis 67 Gew.-%), besonders bevorzugt 650 bis 750 g/l (54 bis 65 Gew.-%) beträgt. Die Gesamtmenge an dem Naphthalinsulfonat-Formaldehyd-Kondensat beträgt 2 bis 30 g/l, bevorzugt 2 bis 20 g/l, besonders bevorzugt 2 bis 10 g/l. Der Ölgehalt beträgt 5 bis 35 g/l, bevorzugt 10 bis 30 g/l, besonders bevorzugt 15 bis 25 g/l.

Bevorzugte Derivate des Naphthalinsulfonat-Formaldehyd-Kondensates sind solche, in denen die Naphthalingruppe mit ein, zwei oder drei Alkylgruppen substituiert ist. Die Alkylgruppe muss vorzugsweise 1 bis 6 C-Atome, insbesondere 2 bis 4 C-Atome enthalten.

Weiter ist in den erfindungsgemäßen Metamitron enthaltenden Suspensionskonzentraten bevorzugt, dass die Löslichkeit des Öls/der Öle in Wasser 2%, vorzugsweise 0,5% nicht überschreitet. Ferner ist bevorzugt, dass die Löslichkeit des Metamitrons in dem fraglichen Öl/in den fraglichen Ölen 2%, vorzugsweise 0,5% nicht überschreitet.

Bevorzugte Öle, die einen Teil der erfindungsgemäßen Suspensionskonzentrate bilden, sind solche, die ausgewählt sind aus der Gruppe umfassend Kohlenwasserstofföle (Paraffinöle), Triglyceridesteröle, (synthetische) Esteröle mit ein, zwei, drei oder vier Estergruppen pro Molekül, aliphatische Aldehyde, Ketone, Ether, Halogenide und Säuren, in welchen die Esteröle mit ein, zwei, drei oder vier Estergruppen vorzugsweise 8 bis 80 C-Atome pro Molekül aufweisen und die aliphatischen Ölbestandteile vorzugsweise 6 bis 30 C-Atome, bevorzugt 8 bis 24 C-Atome und besonders bevorzugt 10 bis 20 C-Atome pro Molekül aufweisen.

Bevorzugte Kohlenwasserstofföle sind Mineralöle und synthetische Kohlenwasserstofföle, die ausschließlich aus Kohlenstoff und Wasserstoff bestehen.

Die Triglyceridöle können tierischer, pflanzlicher oder synthetischer Natur sein.

Besonders bevorzugte wasserunlösliche Esteröle, die Teil der erfindungsgemäßen Suspensionskonzentrate sind, sind solche, die 8 bis 72, bevorzugt 10 bis 60 und insbesondere 12 bis 46 C-Atome enthalten.
Es ist wünschenswert, dass der Stockpunkt der Esteröle nicht höher als 40°C ist, bevorzugt nicht mehr als 30°C, insbesondere nicht mehr als 20°C und besonders bevorzugt nicht mehr als 10°C ist.
Mit Bezug auf die weitere Beschreibung werden die folgenden Definitionen gemacht: Hydrocarbonyl (R-) bezeichnet eine lineare oder verzweigte Alkyl-, Alkenyl- oder Alkinyl-Gruppe, bspw. Ethyl- (-CH₂CH₃), Ethenyl- (-CH=CH₂) oder Ethinyl- (-C≡CH). Hydrocarbonyl (-R-) bezeichnet eine lineare oder verzweigte Alkylen-, Alkenylenoder Alkinylen-Gruppe, bspw. Ethylen- (-CH₂CH₂-), Ethenylen- (-CH=CH-) oder Ethinylen- (-C≡C-).

Die kinematische Viskosität der Öle bei 40°C sollte 100 mm² s⁻¹ (100 cStokes), bevorzugt 75 mm² s⁻¹ (75 cStokes), weiter bevorzugt 55 mm² s⁻¹ (55 cStokes) und besonders bevorzugt 35 mm² s⁻¹ (35 cStokes) nicht überschreiten. Der Siedepunkt muss bei mindestens 190°C, bevorzugt mindestens 220°C, weiter bevorzugt mindestens 240°C und besonderes bevorzugt mindestens 260°C betragen.

Erfindungsgemäß ist der Alkoholbestandteil des Esteröls von einem vorzugsweise aliphatischen Monoalkohol mit der allgemeinen Formel I oder II

R₁OH I

R₂O-R₃(-O-R₄)ₙ-OH II

abgeleitet, worin R₁ und R₂ per se einen linearen oder verzweigten, gesättigten oder ungesättigten Kohlenwasserstoffrest mit 1 bis 30 C-Atomen, bevorzugt 1 bis 22 C-Atomen und R₃ und R4 per se einen linearen oder verzweigten, gesättigten oder ungesättigten Kohlenwasserstoffrest mit 1 bis 22 C-Atomen, bevorzugt 2 bis 9 C-Atomen, weiter bevorzugt mit 2 bis 4 C-Atomen und besonders bevorzugt 2 bis 3 C-Atomen bezeichnen und n entweder 0, 1 oder 2 ist.

Beispiele für Alkohole gemäß den Formeln I und II sind Methanol, Ethanol, Propanol, Isopropanol, Butanol, Isobutanol, Amylalkohol, Hexanol, Heptanol, Oktanol, 2-Ethylhexanol, Nonanol, Cetylalkohol, Ethoxyethanol, Butoxyethanol und deren ungesättigte Analoge.

Der Säurebestandteil der Ester kann von einer vorzugsweise aliphatischen Monocarbonsäure mit der Formel R₅COOH abgeleitet werden, worin R5 Wasserstoff oder einen linearen oder verzweigten, gesättigten oder ungesättigten aliphatischen Kohlenwasserstoffrest mit 1 bis 30 C-Atomen, bevorzugt 8 bis 20 C-Atomen oder einen linearen oder verzweigten, ganz oder teilweise aromatischen Kohlenwasserstoffrest mit 6 bis 30 C-Atomen, bevorzugt 6 bis 20 C-Atomen bezeichnet, wobei sowohl die aliphatischen als auch die aromatischen Säuren optional mit ein oder zwei Hydroxylgruppen substituiert sein können. Beispiele für solche Säuren sind Buttersäure, Capronsäure, Caprylsäure, Decansäure, 2-Ethylcapronsäure, Laurinsäure, Myristinsäure, Palmitinsäure, Stearinsäure und hydroxysubstituierte Stearinsäure. Mischungen technischer Fettsäuren können auch verwendet werden, wie z. B. C₁₆- und C₁₈-Fettsäuren. Andere Beispiele sind Benzoesäure und Salicylsäure.

Eine bevorzugte Klasse von Estern zur Verwendung in den erfindungsgemäßen Suspensionskonzentrate umfasst Ester aus der Gruppe bestehend aus 2-Ethylhexyllaureat, 2-Ethylhexylmyristat, 2-Ethylhexylpalmitat, 2-Ethylhexylstearat, Isobutylstearat, Isopropylmyristat, Isooctylester technischer C₁₆- und C₁₈-Fettsäuren und Mischungen hiervon.

Eine weitere bevorzugte Klasse von Säurebestandteilen ist von ungesättigten Säuren wie Ölsäure, Ricinolsäure, Linolsäure oder Linolensäure abgeleitet. Beispiele für entsprechende Ester sind 2-Ethylhexyloleat und Isobutyloleat, Isobutylricinolat, Isobutyllinolat und Isobutyllinolenat.

Besonders geeignete Ester sind C₂₋₂₀-Monoalkoholester der Ölsäure, C₂₋₁₂-Monoalkoholester der Laurinsäure und Myristinsäure und C₆₋₉-Monoalkoholester der Palmitinsäure und Stearinsäure.

In einer weiteren Ausgestaltung der Erfindung ist der Säurebestandteil des Esters von einer Säure der allgemeinen Formel HOOC(-A)ₘ-COOH abgeleitet, wobei m 0 oder 1 ist und A einen linearen oder verzweigten, gesättigten oder ungesättigten aliphatischen Kohlenwasserstoffrest mit 1 bis 24 C-Atomen, vorzugsweise 2 bis 16 C-Atomen bezeichnet, der optional mit ein oder zwei Hydroxylgruppen substituiert sein kann. A kann auch eine zweibindige Kohlenwasserstoffgruppe mit einem oder mehr aromatischen Ringen bezeichnen, so dass dieser Rest insgesamt 6 bis 24 C-Atome, vorzugsweise 6 bis 16 C-Atome enthält, die optional mit ein oder zwei Hydroxylgruppen substituiert sein kann.

Beispiele für Dicarbonsäuren sind Oxalsäure, Bernsteinsäure, 2-Hydroxybernsteinsäure, 2,3-Dimethylbernsteinsäure, Glutarsäure, Adipinsäure, Pimelinsäure, Hexandisäure, Azelainsäure, Sebacinsäure und Phthalsäure.

Ein geeigneter Ester kann auch von einer Säure der Formel HOOC-A'-COOH abgeleitet werden, worin A' eine ungesättigte Kohlenwasserstoffgruppe mit 2 bis 24 C-Atomen, vorzugsweise 2 bis 16 C-Atomen bezeichnet.

Wenn der Säurebestandteil des Esters eine Dicarbonsäure ist, sollten vorzugsweise beide Säurereste verestert sein, aber einer dieser Reste kann auch ganz oder teilweise in Form der freien Säure vorliegen und optional ganz oder teilweise in ein Salz überführt sein.
Weitere Beispiele für Ester, die in den erfindungsgemäßen Suspensionskonzentraten verwendet werden können, sind Ester, in denen der Alkoholbestandteil von einem Diol der Formel IIa, IIb, llc, IId abgeleitet ist 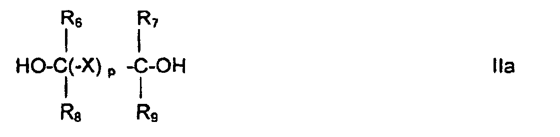 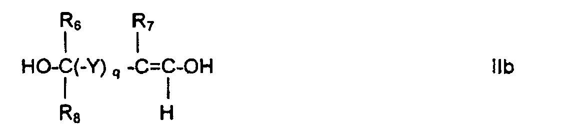 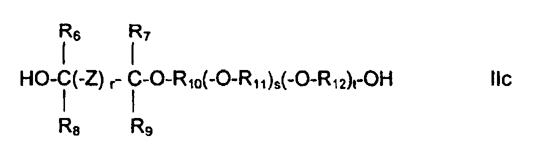 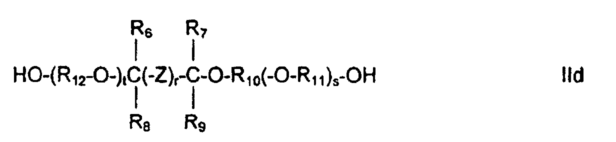 oder Ester eines Triols der Formel IIIa oder Ester eines Tetraalkohols der Formel IIIb 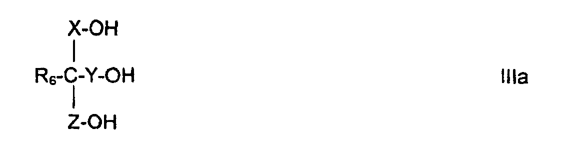 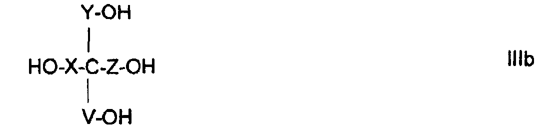 worin R₆, R₇, R₈ und R₉ gleich oder verschieden sind und jeder Rest Wasserstoff, einen linearen oder verzweigten Alkylrest oder einen linearen oder verzweigten ungesättigten Kohlenwasserstoffrest bezeichnet, p, q und r gleich 0 oder 1 sind, s und t gleich 0, 1 oder 2 sind, V, X, Y und Z gleich oder verschieden sind und jeder Rest einen linearen oder verzweigten, gesättigten oder ungesättigten Kohlenwasserstoffrest mit 1 bis 15 C-Atomen bezeichnet, wobei die Gesamtzahl der C-Atome im (Poly)-Alkoholmolekül unter Ausschluss von R₁₀, R₁₁ und R₁₂ 22, vorzugsweise 12 nicht übersteigt, und R₁₀, R₁₁ und R₁₂ unabhängig voneinander einen linearen oder verzweigten, gesättigten oder ungesättigten Kohlenwasserstoffrest mit 2 bis 10 C-Atomen, vorzugsweise 2 bis 4 C-Atomen und insbesondere 2 oder 3 C-Atomen bezeichnen. Wenn der Alkoholbestandteil des Esters ein Diol (Glykol), ein Triol oder ein Tetraalkohol ist, sollten die Alkoholgruppen vorzugsweise verestert sein, aber sie können auch nicht verestert sein. Der Veresterungsgrad sollte wenigstens 50% betragen.

Eine bevorzugte Gruppe von Estern der oben erwähnten Klasse ist diejenige, bei der der Alkoholbestandteil von Alkoholen aus der Gruppe bestehend aus Ethylenglykol, Tetrapolyethylenglykol, Propylenglykol, Dipropylenglykol, Hexylenglykol, Dimethylpropandiol, 2,2,4-Trimethylenpentan-1,3-diol, Trimethylolpropan und Pentaerythrol abgeleitet ist.

Der Säurebestandteil der Ester, deren Alkoholbestandteil von einem Diol der Formel IIa, IIb, IIc, IId, einem Triol der Formel IIIa oder einem Tetraalkohol der Formel IIIb abgeleitet ist, ist abgeleitet von Monocarbonsäuren der Formel R₁₃COOH, worin R₁₃ Wasserstoff oder einen linearen oder verzweigten, gesättigten oder ungesättigten aliphatischen Kohlenwasserstoffrest mit 1 bis 30 C-Atomen, vorzugsweise 8 bis 20 C-Atomen oder einen linearen oder verzweigten, ganz oder teilweise aromatischen Kohlenwasserstoffrest mit 6 bis 30 C-Atomen, vorzugsweise 6 bis 20 C-Atomen bezeichnet und worin sowohl die aliphatische als auch die ganz oder teilweise aromatische Carbonsäure optional mit ein oder zwei Hydroxylgruppen substituiert sein kann.

Diese Säure kann vorzugsweise aus der Gruppe umfassend Propansäure, Isopropansäure, Buttersäure, Isobuttersäure, Milchsäure, Valeriansäure, Capronsäure, Isoheptansäure, Capronsäure, Isocapronsäure, 2-Ethylcapronsäure, Nonansäure und Decansäure sowie ungesättigten Varianten hiervon zusammen mit Benzoesäure und Salicylsäure und Mischungen technischer C₁₂-, C₁₄-, C₁₆- oder C₁₈-Fettsäuren, bspw. technische Ölsäure, ausgewählt werden. Verschiedene Säuren können für die Veresterung der beiden Alkoholgruppen des Diols verwendet werden.

Die Viskosität der Suspensionskonzentrate, gemessen bei 25°C mit einem Brookfield-Viskosimeter bei einer Drehzahl von 20 (rpm) und einer Spindel vom Typ RV, sollte weniger als 1600 Brookfield (mPaxs), vorzugsweise weniger als 1400 Brookfield (mPaxs), insbesondere weniger als 1200 Brookfield (mPaxs) und besonders bevorzugt weniger als 1000 Brookfield (mPaxs), betragen.

Der pH-Wert der Zusammensetzung, gemessen in einer Verdünnung von 5% in deionisiertem Wasser muss in einem Bereich zwischen schwach alkalisch und mäßig sauer liegen. Der pH-Wert sollte 9,0, bevorzugt 8,5, weiter bevorzugt 8,0 und besonders bevorzugt 7,5 nicht überschreiten. Der pH-Wert muss mindestens 2,0, bevorzugt mindestens 3,0, weiter bevorzugt mindestens 3,5 und besonders bevorzugt mindestens 4,0 betragen.

Suspensionskonzentrate können im mäßig sauren pH-Bereich durch Zusatz einer freien Säure oder einer teilweise neutralisierten Säure stabilisiert werden. Solche Säuren können bspw. Myristinsäure, Essigsäure, Propionsäure, Chloressigsäure, Chlorpropionsäure, Milchsäure, Äpfelsäure, Weinsäure, Zitronensäure, Oxalsäure, Borsäure und/oder Phosphorsäure sein.

Die Suspensionskonzentrate sollten eine bestimmte Menge an oberflächenaktiven Substanzen enthalten, die als Dispergiermittel und Emulgiermittel (Stabilisator) wirken. Der Gehalt muss mindestens 10 g/l betragen und beträgt höchstens 150 g/l.

Der Gehalt an *"ausgewählten oberflächenaktiven Substanzen"* in der Metamitron-Suspension, ausgewählt aus der Gruppe umfassend coethoxylierte / propoxylierte nichtionische oberflächenaktive Substanzen, Phosphatester von alkoxyliertem Mono, Di- oder Tristyrylphenol, Sulfatester von alkoxyliertem Mono-, Di- oder Tristyrylphenol und das Naphthalinsulfonat-Formaldehyd-Kondensat muss mindestens 10 g/l betragen und beträgt höchstens 130 g/l.

Der Gehalt an Naphthalinsulfonat-Formaldehyd-Kondensat, berechnet auf der Grundlage des Gesamtgewichts der oberflächenaktiven Substanzen in der Zusammensetzung, beträgt mindestens 10% und höchstens 46%.

Üblicherweise sollten Sulfatester-Emulgatoren den Phosphatester-Emulgatoren vorgezogen werden, da sie leichter fließende Suspensionen ergeben. Alle *"ausgewählten oberflächenaktiven Substanzen"* verbessern im optimalen Konzentrationsbereich die Fließfähigkeit der hochkonzentrierten Suspensionskonzentrate.

Bei den auf coethoxylierten/propoxylierten nichtionischen Substanzen basierenden *"ausgewählten oberflächenaktiven Substanzen"* muss derjenige Molekülteil, der von Oxyethylenketten und Oxypropylenketten gebildet wird, mindestens 60 Gew.-%, bevorzugt mindestens 70 Gew.-%, weiter bevorzugt mindestens 80 Gew.-% und besonders bevorzugt mindestens 90 Gew.-% des Gesamtmoleküls ausmachen.

Geeignete coethoxylierte/propoxylierte nichtionische Substanzen sind solche, die ausschließlich durch Polymerisation von Ethylenoxid und Propylenoxid oder durch eine Reaktion zwischen einem Alkanol, Ethylenoxid und Propylenoxid (coethoxyliertes/propoxyliertes Alkanol) gebildet werden. Beispiele für erstere sind Polyoxyethylen-Polyoxypropylen-Blockpolymere. Das Blockpolymer muss vorzugsweise durch eine zentrale Oxypropylenkette mit Oxyethylenketten an jedem Ende gebildet sein. Geeignet sind jedoch auch Polymere, die durch Coethoxylieren/propoxylieren von Phenolen erhalten werden wie z.B. α-(p-Nonylphenyl)-ω-hydroxypolyoxypropylen und -polyoxyethylen".

Der prozentuale Gehalt an Polyoxyethylen, berechnet bezogen auf das Gewicht der coethoxylierten/propoxylierten Substanzen muss mindestens 10%, bevorzugt mindestens 15%, weiter bevorzugt mindestens 20% und besonders bevorzugt mindestens 25% betragen und gleichzeitig 69%, bevorzugt 50%, weiter bevorzugt 45 und besonders bevorzugt 40% des Gesamtmoleküls nicht überschreiten.

Das Molekulargewicht der coethoxylierten/propoxylierten nichtionische Substanzen muss mindestens 1.000, bevorzugt 1.500, weiter bevorzugt 2.000, insbesondere 2.500 und besonders bevorzugt 3.000 Dalton betragen und gleichzeitig 20.000, bevorzugt 16.000, weiter bevorzugt 13.000, insbesondere 10.000 und besonders bevorzugt 7.500 Dalton nicht überschreiten.

Von denjenigen *"ausgewählten oberflächenaktiven Substanzen"* auf Basis entweder von Phosphatestern oder Sulfatestern von alkoxyliertem Mono-, Di- oder Tristyrylphenol sind die bevorzugten Phosphatester-Emulgatoren Mono- und/oder Diester von Phosphorsäure mit alkoxyliertem Mono-, Di- oder Tristyrylphenol, welche optional mit ein, zwei oder drei Alkylgruppen substituiert sein können, und die bevorzugten Sulfatester sind Sulfatester-Emulgatoren, welche Monoester von Schwefelsäure mit alkoxyliertem Mono-, Di- oder Tristyrylphenol sind, welche optional mit ein, zwei oder drei Alkylgruppen substituiert sein können. Die Ester können in Form der Säure oder ganz oder teilweise als Salz vorliegen. Die alkoxylierten Mono-, Di- oder Tristyrylphenole sind grundsätzlich entweder (100%) ethoxyliert oder coethoxyliert/propoxyliert.

Besonders bevorzugte Kombinationen der ausgewählten oberflächenaktiven Substanzen sind die Kombination aus Naphthalinsulfonat-Formaldehyd-Kondensat und coethoxylierten/propoxylierten nichtionischen Substanzen im Verhältnis 1:4 bis 1:10. Diese Kombinationen ergeben niedrigviskose Suspensionskonzentrate.

Das bevorzugte kommerzielle Produkt vom Typ Naphthalinsulfonat-Formaldehyd-Kondensat ist Morwet D 425.

Es mag wünschenswert sein, ein oder mehrere Glykolkomponenten oder Glykoletherkomponenten in einer Menge von 5-120 g/l, bevorzugt in einer Menge von 10-80 g/l und besonders bevorzugt in einer Menge von 15-60 g/l zuzugeben. Hierbei kann die Glykolkomponente aus der Gruppe umfassend bspw. Ethylenglykol, Propylenglykol, Hexylenglykol, Polyglykole wie Di-, Tri- und Tetraethylenglykol sowie Di-, Tri- und Tetrapropylenglykol ausgewählt sein, und die Glykolether können aus der Gruppe umfassend Butyldiethylenglykolether, Propylenglykolmethylether, Dipropylenglykolmethylether, Tripropylenglykolmethylether und Dipropylenglykolbutylether ausgewählt sein. Die Glykolkomponenten können die Stabilität der Emulsion des verdünnten Produkts verbessern, die Viskosität modifizieren und die Kältestabilität der Suspension verbessern.

Andere Additive, die bspw. zur Verbesserung der Kältestabilität zugegeben werden, sind Glycerin, Sorbit, Harnstoff und anorganische Salze wie Natriumchlorid und Kalisalz.

Um die Phasentrennung während der Lagerung zu verhindern, wird es normalerweise wünschenswert sein, dass die wässrige Phase mit einem wasserlöslichen Polymer, welches kein Coalkoxylat von Polyoxyethylen und Polyoxypropylen ist, leicht angedickt wird. Bevorzugte Polymere haben ein Molekulargewicht von mindestens 3.000, bevorzugt mindestens 5.000 und besonders bevorzugt mindestens 8.000 Dalton. Die bevorzugten Typen sind Xanthan, Polyvinylalkohol und nichtionische Celluloseether wie Methylcellulose, Polyhydroxyethylcellulose und Polyhydroxypropylcellulose. Die Gesamtmenge des Polymers beträgt normalerweise etwa 1 g/l, vorzugsweise zwischen 0,2 bis 5 g/l.

Alle oben genannten Werte in g/l sind auf der Basis des gebrauchsfertigen, unverdünnten Suspensionskonzentrates berechnet.

Die Suspensionskonzentrate werden beim Anbau von Rüben zur Unkrautvernichtung verwendet, indem sie mit Wasser auf die Gebrauchskonzentration von ca. 0,2 bis 3 Gew.-% verdünnt werden.

Die Suspensionskonzentrate können durch Mischen/Lösen der oberflächenaktiven Substanzen in Wasser und Zugabe von technischem Metamitron unter Rühren vorgemischt werden. Die Suspensionskonzentrate können ferner pH-Stabilisator, Frostschutzmittel (Glykol) und Konservierungsmittel enthalten. Die Mischung wird in einer Kugelmühle (Kolloidmühle) gemahlen, bis die gewünschte Partikelgröße erreicht ist. Danach werden ein wasserlösliches Polymer zur Einstellung der Viskosität der wässrigen Phase, die Öl-Komponente und gegebenenfalls weitere oberflächenaktive Substanzen zugegeben wie oben beschrieben. Sowohl das wasserlösliche Polymer als auch das Öl können optional bereits vor dem Mahlvorgang zugesetzt werden. Schließlich wird wirkungsvoll gerührt bis das wasserlösliche Polymer gleichmäßig verteilt ist. Optional kann die Viskosität durch zusätzliche Zugabe des wasserlöslichen Polymers eingestellt werden.

### Referenzliste

Die Liste ist eine Beschreibung der Handelsprodukte, die in den folgenden Beispielen genannt werden.

| **Nr.** | **Handelsname** | **Chemische Zusammensetzung** | **Lieferant** |
|---|---|---|---|
| 1 | Morwet D 425® | Naphthalinsulfonat-Formaldehyd-Kondensat | Witco |
| 2 | Agrilan AEC 321® | Alkanolcoethoxylat/-propoxylat | Akzo-Nobel |
| 3 | Synperonic PE/P 103® | Polyoxyethylen-Polyoxypropylen-Blockpolymer | ICI |
| 4 | Tensiofix LO 51® | Organisches Entschäumungsmittel | OmniChem |
| 5 | Kathon MW® | Etwa 12% auf Isothiazolin basierendes Biozid | Rohm & Haas |
| 6 | Kelzan S® | Xanthan | Kelco |
| 7 | Radia 7331® | Ethylhexyloleat, technisch | FINA |
| 8 | Radia 7060® | Methyloleat, technisch | FINA |
| 9 | Radia 7190® | Isopropylmyristat, technisch | FINA |
| 10 | Radia 7171® | Pentaerythroltetraoleat, technisch | FINA |
| 11 | Radia 7204® | Propylenglykoldioleat, technisch | FINA |
| 12 | Paraffinöl 7878N® | Mineralöl: 7878N Dichte: 0,870-0,885 Viskosität: 15 cStokes bei 40°C | Superfos, Dänemark |

Verdünnungsexperiment: Eine 2g-Probe wird in einem 150ml-Becherglas mit Leitungswasser (etwa 20°dH) auf 100ml verdünnt.
Eine ergänzende Probe wird aus der 2g-Probe und 2 g Herbasan® hergestellt (Herbasan® ist eine Suspension mit 160 g/l Phenmedipham, das mit etwa 350 g/l Esteröl aktiviert ist). Das Produkt wird von der Firma KVK AGRO A/S, Dänemark, vertrieben.
Das Rühren wird mit einem Magnetrührer bei mäßiger Geschwindigkeit durchgeführt, so dass ein 1-2 cm tiefer Trichter an der Oberfläche gebildet wird. Das Rühren wird nach 1 bzw. 3 Stunden beendet. Nach 15 min Stehen lassen wird untersucht, ob es Niederschläge im oberen Teil oder am Boden gibt.
Sedimentation in Glasflaschen: vgl. Beispiel 1
Lagertemperatur: Raumtemperatur und 45°C

### Beispiel 1

Das Beispiel bezieht sich auf Suspensionskonzentrate enthaltend 736 bis 790 g/l Metamitron. Die oberflächenaktiven Substanzen wurden ausgewählt aus der Gruppe der coethoxylierten/propoxylierten Alkanole, Polyoxyethylen-Polyoxypropylen-Blockpolymere und Naphthalinsulfonat-Formaldehyd-Kondensat. Die entsprechenden Handelsprodukte sind Agrilan AEC 321, Synperonic PE/P 103 und Morwet D 425. In einer 0,6 I Dyno-Mühle wird bei einer Umfangsgeschwindigkeit von etwa 7 m/s und einem Fluss von etwa 4 l/h gemahlen. Die Mühle ist für den Fall, dass die Temperatur 40°C übersteigt, mit einem Thermoschalter ausgestattet. Alle Proben werden 20 min bei Höchstgeschwindigkeit gemahlen, bis 90% der Partikel einen Durchmesser von etwa 5 µm aufweisen. Der pH-Wert (2%-Lösung) wird auf 5,8 bis 6,0 eingestellt. Man erhält ein Vorkonzentrat ohne Kelzan S. Zu einer Teilprobe wird Kelzan S zugefügt und mehrere Stunden bis zur vollständigen Lösung gerührt (verdicktes Vorkonzentrat). Radia 7331 wird bei den einzelnen Versuchen den Vorkonzentraten zusetzt und anschließend mit einem Hochgeschwindigkeitsrührer gemischt.

### Untersuchungen

Die Viskosität wird mit einem Brookfield-Viskosimeter bei 25°C gemessen. Die Umdrehungsgeschwindigkeit beträgt 20 Umdrehungen pro Minute (rpm). Als Spindel wird der Typ RV in einer passenden Größe (vorzugsweise RV2 und RV3) verwendet. Die erwähnten Bedingungen sind Standard für die folgenden Viskositätsmessungen.

Die Proben werden in 100 ml Glasflaschen gegossen, bis gerade die Biegung am Flaschenhals erreicht ist. Die Höhe der Flüssigkeit beträgt 65 bis 70 mm. Die Proben wurden 6 Wochen bei 45°C und 13 Wochen bei Raumtemperatur gelagert. Es wird der Anteil der klaren Phase im oberen Teil und das sedimentierte Metamitron am Boden festgestellt.
Die Probenzusammensetzung und die Ergebnisse sind aus Tabelle 1 ersichtlich.

### Schlussfolgerung

Die Proben haben eine geeignete Viskosität. Alle Proben waren in allen Verdünnungsexperimenten zufriedenstellend, sowohl allein als auch in der Mischung mit Herbasan®. Im Hinblick auf Emulgier- und Suspendierungseigenschaften zeigen die Lagerversuche bei 45°C, dass alle Proben bei dieser Temperatur eine zufriedenstellende Stabilität aufweisen. Die Neigung zur Abscheidung einer oberen klaren Ölphase ist gering.

| | | | |
|---|---|---|---|
| **Vorkonzentrat ohne Kelzan S** | 296.3 g | Wasser | |
| | 40.0 g | Propylenglykol | |
| | 15.0 g | Morwet D-425® | (1 |
| | 10.0 g | Synperonic PE/P 103® | (3 |
| | 5.0 g | Agrilan AEC 321® | (2 |
| | 3.0 g | Tensiofix LO 51® | (4 |
| | 0.5 g | Zitronensäure | |
| | 0.2 g | Kathon MW® | (5 |
| | 714.0 g | Metamitron, 98% | |
| **Verdicktes Vorkonzentrat** | 1084.0 g | Mahlen in der Dyno-Mühle, Hochgeschwindigkeitsrühren und pH-Einstellung auf 5,8-6,0 (2%) | |
| | 1084.0 g | Vorkonzentrat, 64.5% Metamitron | |
| | 944.2 g | Gemahlenes Konzentrat aus Dyno-Mühle | |
| | 0.8 g | Kelzan S® Langzeitrühren | (6 |
| | 945.0 g | Verdicktes Vorkonzentrat, 64.5% Metamitron | |

**Tabelle 1**

| Probe | 1.1 | 1.2 | 1.3 | 1.4 |
|---|---|---|---|---|
| | | | | |
| g verdicktes Vorkonzentrat | 945 | 945 | 945 | 945 |
| g Vorkonzentrat ohne Kelzan S | 278 | 252 | 224 | 196 |
| g Radia 7331 (7 | 2 | 20 | 40 | 60 |
| Gesamtgewicht | 1225 | 1217 | 1209 | 1201 |
| | | | | |
| Metamitron g/l | 789 | 772 | 754 | 736 |
| Metamitron Gew.-% | 64.4 | 63.4 | 62.4 | 61.3 |
| | | | | |
| Berechnete Dichte (g/ml) | 1.225 | 1.217 | 1.209 | 1.201 |
| | | | | |
| Viskosität Brookfield (mPaxs) | 950 | 1000 | 1050 | 1100 |
| | | | | |

| Vor der Lagerung: | | | | |
|---|---|---|---|---|
| Verdünnungsexperimente 1 h | Alle: Oben in Ordnung | | | |
| 2%ige Probe 3 h | Kein Niederschlag oder Ausflocken am Boden | | | |
| | | | | |
| Verdünnungsprobe 1 h | Alle: Oben in Ordnung | | | |
| 2%ige Probe + 2% Herbasan® 3 h | Kein Niederschlag oder Ausflocken am Boden | | | |
| | | | | |

| Lagerung: 13 Wochen, 45°C: | | | | |
|---|---|---|---|---|
| Verdünnungsexperimente 1 h | Alle: Oben in Ordnung | | | |
| 2%ige Probe 3 h | Kein Niederschlag oder Ausflocken am Boden | | | |
| | | | | |
| Verdünnungsexperimente 1 h | Alle: Oben in Ordnung | | | |
| 2%ige Probe + 2% Herbasan® 3 h | Kein Niederschlag oder Ausflocken am Boden | | | |
| | | | | |

| Untersuchung d. Sedimentation: | | | | |
|---|---|---|---|---|
| 6 Wochen, 45°C | | | | |
| Obere separierte klare Phase | 6 mm | 4 mm | 3 mm | 3 mm |
| Sedimentiertes Metamitron | Ja | Spuren | Nein | Nein |
| | | | | |
| 13 Wochen, Raumtemperatur | | | | |
| Obere separierte klare Phase | 7 mm | 5 mm | 3 mm | 3 mm |
| Sedimentiertes Metamitron | Ja | Ja | Spuren | Nein |

### Beispiel 2

Das Beispiel 2 entspricht im wesentlichen dem Beispiel 1. Allerdings wurde eine geringere Menge an Kelzan S, nur 0,6 g/l, und verschiedene Öltypen zur Stabilisierung verwendet. Die geringere Menge an Kelzan S verringerte die Viskosität der Proben und insbesondere die Viskosität der wässrigen Phase und machte sie empfindlicher für die Tendenz zur Sedimentierung. Dies hat den Effekt, dass es einfacher ist, den stabilisierenden Effekt des Öls auf die Sedimentation zu beobachten.
Man verwendet die gleichen Vorkonzentrate wie im Beispiel 1.
Der Metamitron-Gehalt variiert von 700 bis 772 g/l.

Die Probenzusammensetzung und die Ergebnisse gehen aus Tabelle 2 hervor.

### Untersuchung

Die Untersuchung ist identisch mit der Untersuchung aus den Beispielen 1. Die Untersuchung der Sedimentation wurde nur bei den Proben aus dem beschleunigten Lagertest bei 45°C durchgeführt.

### Schlussfolgerung

Die Viskosität ist generell niedrig, was die Tendenz zur Sedimentation erhöht. Darüber hinaus stellt die Lagerung über drei Monate bei 45°C einen wesentlich härteren Test dar als die übliche Vorgehensweise, nämlich zwei Wochen bei 54°C.
Das Beispiel zeigt uneingeschränkt die stabilisierende Wirkung des Öls auf die Sedimentation. Der Gehalt an Morwet D 425 stellt sicher, dass das Metamitron nicht ausflockt und in den Verdünnungsproben nicht ausfällt.
Die stabilisierende Wirkung der verschiedenen Öle ist fast gleich.

### Beispiel 2

| | | |
|---|---|---|
| **Vorkonzentrat** | 1084.4 g | Vorkonzentrat aus Dyno-Mühle |
| | 0.6 g | Kelzan S® (6 |
| | | Langzeitrühren |
| | 1085.0 g | Verdicktes Vorkonzentrat, 64.5% Metamitron |

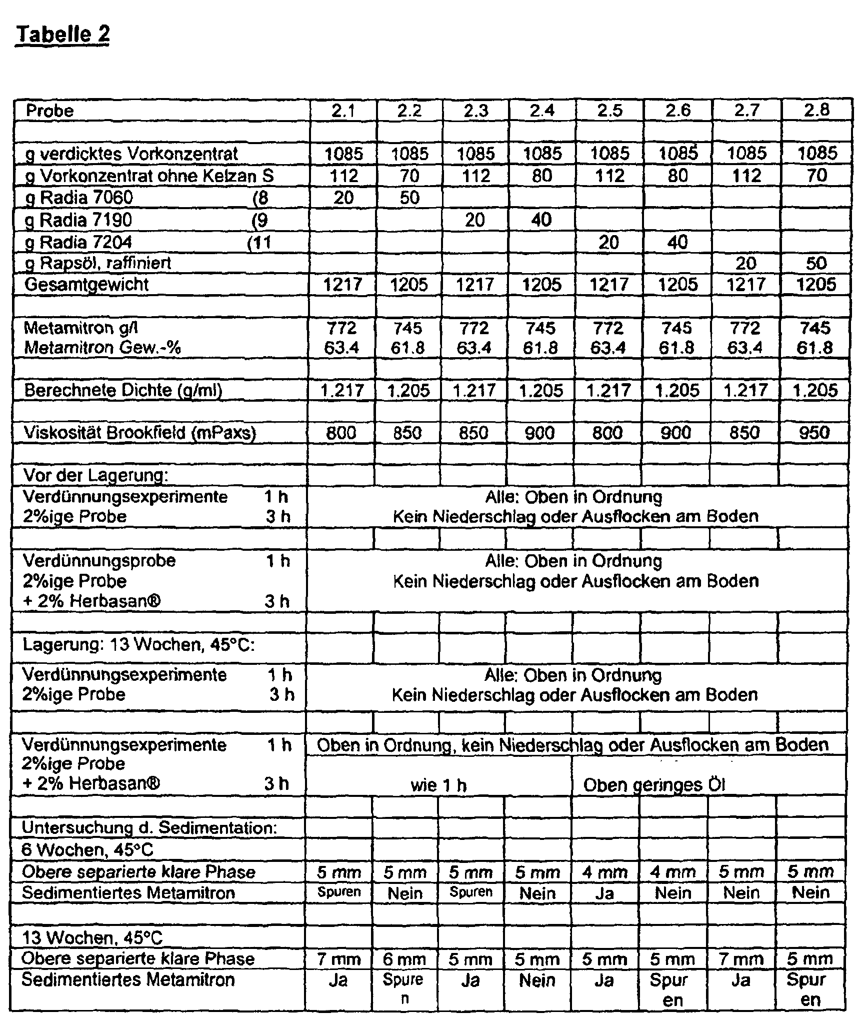

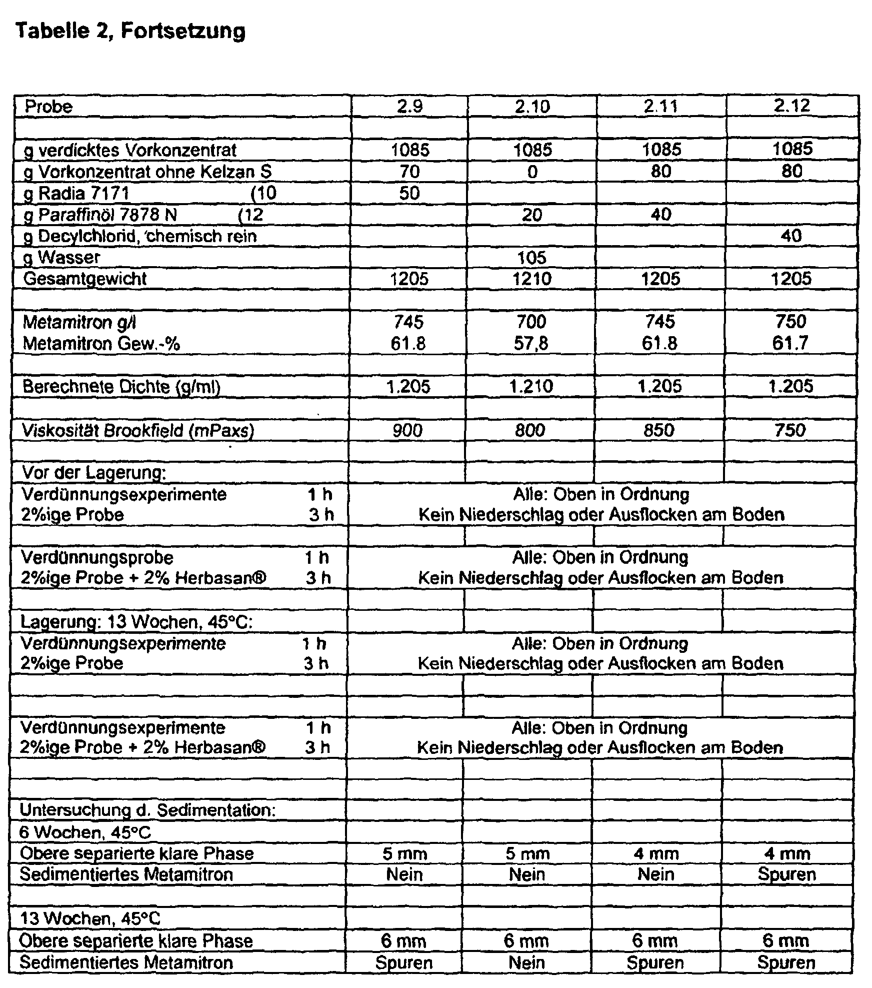

## Patentansprüche

1. Herbizide Suspensionskonzentrate von Metamitron (4-Amino-4,5-dihydro-3-methyl-6-phenyl-1,2,4-triazin-5-on) in fein gemahlener Form, suspendiert in einer flüssigen, wässrigen Phase in einer Menge von 500 bis 900g/l (51 bis 71 Gew.-%), **dadurch gekennzeichnet, dass** sie ein Naphthalinsulfonat-Formaldehyd-Kondensat in einer Menge von 2 bis 50 g/l, ein oder mehrere in der wässrigen Phase emulgierte(s) Öl(e) in einer Menge von 2 bis 40 g/l und einen gesamten Gehalt von mindestens 10 g/l, höchstens jedoch 150 g/l an oberflächenaktiven Substanzen enthalten.

2. Herbizide Suspensionskonzentrate nach Anspruch 1, **dadurch gekennzeichnet, dass** der Gesamtgehalt an Metamitron 550 bis 850g/l (52 bis 69 Gew.-%), bevorzugt 600 bis 800g/l (53 bis 67 Gew.-%), besonders bevorzugt 650 bis 750g/l (54 bis 65 Gew.-%) beträgt.

3. Herbizide Suspensionskonzentrate nach Anspruch 1 oder 2, **dadurch gekennzeichnet, dass** die Gesamtmenge an dem Naphthalinsulfonat-Formaldehyd-Kondensat 2 bis 30 g/l, bevorzugt 2 bis 20 g/l, besonders bevorzugt 2 bis 10 g/l beträgt.

4. Herbizide Suspensionskonzentrate nach einem der Ansprüche 1 bis 3, **dadurch gekennzeichnet, dass** der Ölgehalt 5 bis 35 g/l, bevorzugt 10 bis 30 g/l, besonders bevorzugt 15 bis 25 g/l beträgt.

5. Herbizide Suspensionskonzentrate nach einem der Ansprüche 1 bis 4, **dadurch gekennzeichnet, dass** die Löslichkeit des zugefügten Öls/der zugefügten Öle in Wasser 2%, vorzugsweise 0,5% nicht überschreitet und dass die Löslichkeit des Metamitrons in dem fraglichen Öllin den fraglichen Ölen 2%, vorzugsweise 0,5% nicht überschreitet.

6. Herbizide Suspensionskonzentrate nach einem der Ansprüche 1 bis 5, **dadurch gekennzeichnet, dass** die Öle ausgewählt sind aus der Gruppe umfassend Kohlenwasserstofföle (Paraffinöle), Triglyceridesteröle, (synthetische) Esteröle mit ein, zwei, drei oder vier Estergruppen pro Molekül, aliphatische Aldehyde, - Ketone, - Ether, - Halogenide und - Säuren, in welchen die Esteröle mit ein, zwei, drei oder vier Estergruppen vorzugsweise 8 bis 80 C-Atome pro Molekül aufweisen und die aliphatischen Ölbestandteile vorzugsweise 6 bis 30 C-Atome, bevorzugt 8 bis 24 C-Atome und besonders bevorzugt 10 bis 20 C-Atome pro Molekül aufweisen.

7. Herbizide Suspensionskonzentrate nach einem der Ansprüche 1 bis 6, **dadurch gekennzeichnet, dass** der Gesamtgehalt an oberflächenaktiven Substanzen 10 bis 150 g/l, bevorzugt 12 bis 120 g/l, weiter bevorzugt 16 bis 90 g/l, besonders bevorzugt 20 bis 80 g/l beträgt.

8. Herbizide Suspensionskonzentrate nach einem der Ansprüche 1 bis 6, **dadurch gekennzeichnet, dass** der Gehalt an *"ausgewählten oberflächenaktiven Substanzen",* ausgewählt aus der Gruppe umfassend coethoxylierte/-propoxylierte nichtionische oberflächenaktive Substanzen, Phosphatester von alkoxyliertem Mono-, Di- oder Tristyrylphenol, Sulfatester von alkoxyliertem Mono-, Di- oder Tristyrylphenol und das Naphthalinsulfonat-Formaldehyd-Kondensat 10 bis 130 g/l, bevorzugt 12 bis 105 g/l, weiter bevorzugt 16 bis 80g/l, insbesondere 20 bis 60 g/l beträgt.

## Claims

1. Herbicidal suspension concentrates of metamitron (4-amino-4,5-dihydro-3-methyl-6-phenyl-1,2,4-triazine-5-on) in a finely milled form suspended in a liquid aqueous phase in a quantity of from 500 to 900 g/l (51 to 71 % by weight), **characterized in that** they contain 5 to 120 g/l of a naphthalene sulphonate formaldehyde condensate, 2 to 40 g/l of one or more oil(s) emulsified in the water phase, and a total content of at least 10 g/l, but 150 g/l at the most, of surfactants.

2. Herbicidal suspension concentrates according to claim 1, **characterized in that** the total metamitron content ranges from 550 to 850 g/l (52 to 69 % by weight), preferably from 600 to 800 g/l (53 to 67 % by weight) and most preferably from 650 to 750 g/l (54 to 65 % by weight).

3. Herbicidal suspension concentrates according to claim 1 or 2, **characterized in that** the total naphthalene sulphonate formaldehyde condensate content ranges from 2 to 30 g/l, preferably from 2 to 20 g/l and most preferably from 2 to 10 g/l.

4. Herbicidal suspension concentrates according to one of the claims 1 to 3, **characterized in that** the oil content ranges from 5 to 35 g/l, preferably from 10 to 30 g/l, most preferably from 15 to 25 g/l.

5. Herbicidal suspension concentrates according to one of the claims 1 to 4,
**characterized in that** the solubility in water of the oil or oils added does not exceed 2 %, preferably does not exceed 0.5 % and that the solubility of metamitron in the oil(s) of concern does not exceed 2 %, preferably does not exceed 0.5%.

6. Herbicidal suspension concentrates according to one of the claims 1 to 5, **characterized in that** the oils are selected from the group comprising hydrocarbon oils (paraffine oils), triglyceride ester oils, (synthetic) ester oils with one, two, three or four ester groups in each molecule, aliphatic aldehydes, -ketones, -ethers, -halides and -acids in which the ester oils with one, two, three or four ester groups preferably have from 8 to 80 carbon atoms per molecule and the aliphatic oil components preferably have from 6 to 30 carbon atoms, preferably have from 8 to 24 carbon atoms per molecule and more specifically have from 10 to 20 carbon atoms per molecule.

7. Herbicidal suspension concentrates according to one of the claims 1 to 6, **characterized in that** the total surfactant content ranges from 10 to 150 g/l, preferably from 12 to 120 g/l, more preferably from 16 to 90 g/l, and most preferably from 20 to 80 g/l.

8. Herbicidal suspension concentrates according to one of the claims 1 to 6, **characterized in that** the content of *"selected surfactants*" selected from the group comprising ethoxylated/-propoxylated nonionic surfactants, phosphate esters of alkoxylated mono-, di- or tristyryl phenol, sulphate esters of alkoxylated mono-, di- or tristyryl phenol and the naphthalene sulphonate formaldehyde condensate ranges from 10 to 130 g/l, preferably from 12 to 105 g/l, more preferably from 16 to 80 g/l and most preferably from 20 to 60 g/l.

## Revendications

1. Suspensions concentrées herbicides contenant entre 500 et 900 g/l (51 à 71 % en poids) de métamitron (4-amino-4,5-dihydro-3-méthyl-6-phényl-1,2,4-triazine-5-one) finement broyé en suspension dans une phase liquide aqueuse, **caractérisées en ce qu'**elles renferment 2 à 50 g/l d'un condensat de sulfonate de naphtalène-formaldéhyde, 2 à 40 g/l d'une ou plusieurs huile(s) émulsifiée(s) dans la phase aqueuse et que la teneur totale en substances tensioactives est comprise entre 10 g/l minimum et 150 g/l maximum.

2. Suspensions concentrées herbicides selon la revendication 1, **caractérisées en ce que** la teneur totale en métamitron est comprise entre 550 et 850 g/l (entre 52 et 69 % en poids), de préférence entre 600 et 800 g/l (entre 53 et 67 % en poids), une préférence toute particulière étant accordée à une teneur totale comprise entre 650 et 750 g/l (entre 54 et 65 % en poids).

3. Suspensions concentrées herbicides selon la revendication 1 ou 2, **caractérisées en ce que** la teneur totale en condensat de sulfonate de naphtalène-formaldéhyde est comprise entre 2 et 30 g/l, de préférence entre 2 et 20 g/l, une préférence toute particulière étant accordée à une teneur totale comprise entre 2 et 10 g/l.

4. Suspensions concentrées herbicides selon l'une quelconque des revendications 1 à 3, **caractérisées en ce que** la teneur en huile est comprise entre 5 et 35 g/l, de préférence entre 10 et 30 g/l, une préférence toute particulière étant accordée à une teneur totale comprise entre 15 et 25 g/l.

5. Suspensions concentrées herbicides selon l'une quelconque des revendications 1 à 4, **caractérisées en ce que** la solubilité de l'huile / des huiles ajoutées dans l'eau ne dépasse de préférence pas 2 %, préférentiellement ne dépasse pas 0,5 %, et que la solubilité du métamitron dans l'huile / les huiles en question ne dépasse de préférence pas 2 %, préférentiellement ne dépasse pas 0,5 %.

6. Suspensions concentrées herbicides selon l'une quelconque des revendications 1 à 5, **caractérisées en ce que** les huiles sont choisies parmi les huiles hydrocarbonées (huiles de paraffine), les huiles d'ester de triglycéride, les huiles ester (synthétiques) ayant un, deux, trois ou quatre groupements ester par molécule, les aldéhydes, cétones, éthers, halogénures et acides aliphatiques, dans lesquels les huiles ester ayant un, deux, trois ou quatre groupements ester ont de préférence 8 à 80 atomes de carbone par molécule et les constituants aliphatiques de l'huile ont de préférence 6 à 30 atomes de carbone, une préférence plus prononcée étant accordée à 8 à 24 atomes de carbone et une préférence toute particulière à 10 à 20 atomes de carbone par molécule.

7. Suspensions concentrées herbicides selon l'une quelconque des revendications 1 à 6, **caractérisées en ce que** la teneur totale en agents tensioactifs est comprise entre 10 et 150 g/l, de préférence entre 12 et 120 g/l, une préférence plus prononcée étant accordée à une teneur comprise entre 16 et 90 g/l et une préférence toute particulière à une teneur comprise entre 20 et 80 g/l.

8. Suspensions concentrées herbicides selon l'une quelconque des revendications 1 à 6, **caractérisées en ce que** la teneur en « *agents tensioactifs choisis »* parmi les agents tensioactifs non ioniques éthoxylés/propoxylés, l'ester phosphate de mono-, di- ou tristyryl phénol alkoxylé, l'ester sulfate de mono-, di- ou tristyryl phénol alkoxylé est comprise entre 10 et 130 g/l, de préférence entre 12 et 105 g/l, une préférence plus prononcée étant accordée à une teneur comprise entre 16 et 80 g/l et une préférence toute particulière à une teneur comprise entre 20 et 60 g/l.
